# FASCICULE DE BREVET EUROPEEN

(11) **EP 3 458 534 B1**
(45) Date de publication et mention de la délivrance du brevet: **02.03.2022**
(21) Numéro de dépôt: 17723412.7
(22) Date de dépôt: 17.05.2017
(51) Int. Cl.: C09J 7/00

(54) **DISPOSITIF DE MARQUAGE ADHÉSIF**
HAFTMARKIERUNGSVORRICHTUNG
ADHESIVE MARKING DEVICE

(30) Priorité: 18.05.2016 FR 1654404; 18.05.2016 FR 1654406
(43) Date de publication de la demande: 27.03.2019
(73) Titulaire: Adhetec, 65000 Tarbes (FR)
(72) Inventeur: SAMACA MARTINEZ, José Ricardo, 65000 Tarbes (FR); AGUT, Willy, 65000 Tarbes (FR)
(74) Mandataire: Gevers & Orès
(86) Numéro de dépôt international: PCT/EP2017/061800
(87) Numéro de publication internationale: WO 2017/198690

(56) Documents cités:
- EP-A1- 1 520 897
- EP-B1- 1 481 031
- WO-A1-2010/103232

## Description

### 1. Domaine technique de l'invention

L'invention concerne un dispositif de marquage adhésif pour aéronef. L'invention concerne également un procédé de fabrication d'un dispositif de marquage adhésif pour aéronef.

### 2. Arrière-plan technologique

De nombreux marquages doivent être apposés tant à l'extérieur qu'à l'intérieur des aéronefs à des fins d'identification, de contrôle, de sécurité ou décoratives. Dans le contexte de l'invention, on entend par « marquage », un ou plusieurs signes tels que lettre, chiffre, symbole, dessin, image... Ces marquages peuvent être de toute forme et de toute dimension.

En aéronautique, l'utilisation de dispositifs de marquage adhésifs est une solution privilégiée.

Ces dispositifs de marquage adhésifs doivent résister à des conditions extrêmes. En effet, ils sont soumis à la fois à des températures élevées et très basses, à des chocs thermiques, à l'humidité et à d'importantes variations de pression. Il sont également fortement exposés à la lumière ultraviolet.

Ces dispositifs de marquage adhésifs doivent présenter une faible épaisseur et être appliqués sur leur substrat de manière à ne faire aucune saillie. En effet, le marquage doit être le plus fin possible afin de mieux, résister à l'érosion.

De plus, ces dispositifs de marquage adhésifs doivent pouvoir être apposés de manière rapide et fiable.

### 3. Objectifs de l'invention

L'invention vise à pallier au moins certains des inconvénients des dispositifs de marquage pour aéronef connus.

En particulier, l'invention vise à fournir, dans au moins un mode de réalisation, un dispositif de marquage pour aéronef pouvant être posé sur un substrat venant d'être peint.

L'invention vise à fournir, dans au moins un mode de réalisation de l'invention, un dispositif de marquage résistant aux conditions extrêmes auxquelles sont soumises les aéronefs.

L'invention vise aussi à fournir, dans au moins un mode de réalisation, un dispositif de marquage pour aéronef pouvant être posé facilement et rapidement.

L'invention vise également à fournir, dans au moins un mode de réalisation, un dispositif de marquage pour aéronef peu sensible à l'érosion.

l'invention vise à fournir, dans au moins un mode de réalisation de l'invention, un dispositif de marquage pouvant être aisément enlever par un opérateur tout en présentant une résistance aux conditions extrêmes auxquelles sont soumises les aéronefs.

L'invention vise aussi à fournir, dans au moins un mode de réalisation, un dispositif de marquage pour aéronef pouvant être retiré du substrat sur lequel il est apposé sans matériel, produit ou techniques spécifiques.

L'invention vise également à fournir, dans au moins un mode de réalisation, un dispositif de marquage pour aéronef pouvant être ôté rapidement du substrat sur lequel il est apposé.

### 4. Exposé de l'invention

Pour ce faire, l'invention concerne un dispositif de marquage adhésif pour aéronef comprenant :
une couche d'adhésif
- une couche de marquage posée sur la couche d'adhésif et comprenant un marquage et un film support, et
- une couche de vernis recouvrant la couche de marquage.
le dispositif de marquage présentant un taux de transmission de vapeur humide (MVTR) supérieur ou égal à 50g/(m².j).

Le taux de transmission de vapeur humide également appelé MVTR pour Moisture Vapor Transmission Rate est mesuré selon la norme ASTM F1249.

Dans la description qui va suivre, on utilise les termes de dessus, dessous, supérieur(e), inférieur(e) et analogues pour définir une relation d'ordre entre les différentes couches ou films constituant le dispositif de marquage selon l'invention et/ou leurs faces respectives, par référence à un axe normal à la surface du substrat sur lequel le dispositif de marquage doit être apposé et orienté du substrat vers l'extérieur du dispositif de marquage.

Dans le domaine aéronautique, les dispositifs de marquage adhésifs sont généralement apposés sur un substrat qui vient d'être peint. Cependant, si le dispositif de marquage adhésif est apposé trop rapidement sur un tel substrat, des gaz provenant de la peinture sont émis sous le dispositif de marquage. Ces gaz emprisonnés sous le dispositif de marquage forment des bulles et le dispositif de marquage se gondole. Outre le caractère inesthétique de ces bulles, elles créent des irrégularités à la surface du dispositif de marquage le rendant plus sensible à l'érosion. Le dispositif de marquage selon l'invention est particulièrement adapté pour être apposé sur un substrat venant d'être peint. Avec un MVTR supérieur ou égal à 50 g/(m².j), le dispositif de marquage est suffisamment perméable pour laisser échapper les gaz provenant de la désolvatation de la peinture durant la polymérisation et éviter le bullage. En évitant le bullage, on évite notamment que le marquage soit abimé par le gonflement du dispositif de marquage.

De préférence, le dispositif de marquage présentant un taux de transmission de vapeur humide (MVTR) supérieur ou égal à 60g/(m².j), plus préférablement à 70g/(m².j), encore plus préférablement à 80g/(m².j).

Selon un mode de réalisation préféré, le dispositif de marquage présente un MVTR compris entre 50 et 1500 g/(m².j). A cette gamme de MVTR, le dispositif de marquage est suffisamment perméable pour laisser s'échapper les gaz provenant de la peinture tout en conservant une résistance accrue aux conditions extrêmes auxquelles sont soumis les aéronefs. Afin d'avoir un dispositif de marquage avec une résistance optimale notamment lorsqu'il est destiné à être apposé à l'extérieur d'un aéronef, il est préférable que ce dernier présente un MVTR qui soit inférieur à 700g/(m².j), plus préférablement inférieur à 500 g/(m².j).

De préférence, le dispositif de marquage adhésif est destiné à être apposé à l'extérieur d'un aéronef, par exemple sur le fuselage. Le dispositif de marquage selon l'invention est particulièrement adapté aux conditions extrêmes auxquelles est soumis le fuselage d'un avion. De plus, le dispositif de marquage ne se gondolant pas, il est peu sensible au phénomène d'érosion.

Selon un mode de réalisation préféré, le dispositif de marquage est apte à être décapé par un agent décapant. Il peut être nécessaire d'ôter un dispositif de marquage par exemple pour le changer ou lorsque l'aéronef doit être repeint. Les dispositifs de marquage doivent donc à la fois résister aux conditions extrêmes auxquelles ils sont soumis et être faciles à enlever dès que l'opérateur le souhaite. Ces dispositifs sont généralement enlevés mécaniquement par les opérateurs ce qui se révèlent long et fastidieux. Les dispositifs de marquage selon l'invention sont aptes à être décapés. Ainsi, ils peuvent aisément être enlevés par un agent décapant. L'enlèvement du dispositif de marquage est en particulier nécessaire lors du décapage de l'aéronef sur lequel il est apposé. Le décapage d'un avion se fait tous les 5 ou 10 ans pour des raisons esthétiques, mais également pour répondre à l'usure normale de la peinture. Selon ce mode réalisation, l'enlèvement du dispositif de marquage peut se faire simultanément au décapage de la peinture de l'aéronef, par exemple avec des décapants classiques ou à couche intermédiaire, sans que cela ne nécessite une étape supplémentaire.

Typiquement, l'agent décapant est un agent décapant chimique. L'agent décapant peut être tout type d'agent décapant qualifié dans le domaine aéronautique. Selon un mode de réalisation préféré, l'agent décapant comprend de l'alcool benzylique, du chlorure de méthylène, du phénol, du benzaldéhyde et/ou leurs mélanges. De préférence, l'agent décapant comprend de l'alcool benzylique et/ou du chlorure de méthylène.

Le dispositif de marquage selon l'invention comprend une couche de marquage. La couche de marquage comprend un marquage et un film support.

Le film support peut permettre d'opacifier le dispositif de marquage adhésif. Il permet également d'améliorer la résistance mécanique et/ou thermique du dispositif de marquage. Il facilite également l'apposition du dispositif de marquage sur le substrat. Typiquement, le film support comprend un côté supérieur et un côté inférieur.

Selon un mode de réalisation préféré, le marquage est posé sur le côté supérieur du film support.

Selon un mode de réalisation préféré, le film support présente un MVTR supérieur ou égal à 50 g/(m².24h) et de préférence compris entre 50 et 1500g/(m².24h). Lorsque le dispositif de marquage comprend un film support, ce dernier s'avère généralement être l'élément le plus occlusif. En prenant un film support dont le MVTR est supérieur ou égal à 50 g/(m².24h), la perméabilité de l'ensemble du dispositif de marquage sera suffisante pour limiter le bullage.

Le film support peut être poreux, tissé, perforé ou en un matériau perméable. Ainsi, de par sa structure les gaz issus de la polymérisation de la peinture peuvent facilement le traverser. De préférence, le film support est en un matériau perméable ou poreux. Ce type de structure permet d'obtenir un MVTR élevé tout en gardant une bonne résistance mécanique.

Le film support peut être en un matériau choisi dans le groupe constitué de polyester, polyuréthane, polyéther, polyéthylène, polymère silicone, polytétrafluoroéthylène, polypropylène, polychlorure de vinyle, polyoléfine, polyalcène, polysulfone, poly(acétate de vinyle), poly(alcool vinylique) et polyamide.

De préférence, le film support est choisi dans le groupe constitué d'uréthane, de polyester, de polychlorure de vinyle et de silicone. Plus préférablement, le film support est en uréthane.

Selon un mode de réalisation, le film support est en un matériau perméable. C'est alors la matière du film support qui permet la respirabilité du dispositif de marquage. Le matériau perméable peut par exemple comprendre une résine en polyuréthane, de préférence une résine polyuréthane aliphatique.

Selon un mode de réalisation préféré, le film support a une épaisseur comprise entre 20µm et 70µm, de préférence entre 20µm et 50µm. La faible épaisseur du film support permet une meilleure perméabilité. L'épaisseur du film support est particulièrement importante lorsque la respirabilité du dispositif de marquage est due à la perméabilité du film support.

Selon un mode de réalisation, le film support est poreux, tissé et/ou perforé. C'est alors la structure du film support qui permet la respirabilité du dispositif de marquage.

Selon un mode de réalisation préféré, le film support est apte à être décapé par un agent décapant. La présence d'un film support rend l'enlèvement du dispositif de marquage sur le substrat encore plus difficile. Les inventeurs ont constaté que de manière surprenante il suffisait que seul le film support soit apte à être décapé pour que l'ensemble du dispositif de marquage soit apte à être décapé. Selon un mode de réalisation préféré, le film support comprend une résine choisie dans le groupe constitué de polyépoxyde, de polyuréthane, d'alkyde et de leurs mélanges. Les films supports à base de ces résines sont aptes à être décapés par des agents décapants qualifiés dans le domaine aéronautique, par exemple des décapants classiques ou à couche intermédiaire. L'agent décapant peut par exemple être choisi dans le groupe constitué de l'alcool benzylique, du chlorure de méthylène, du phénol, du benzaldéhyde, du chlorure de méthylène, de l'alkylphénol éthoxylate, du peroxyde d'hydrogène et de leurs mélanges.

De préférence, le film support comprend une résine choisie dans le groupe constitué de polyépoxyde, de polyuréthane et d'alkyde. Ces résines sont les liants les plus couramment utilisés pour les peintures d'aéronefs. Un dispositif de marquage dont le film support comprend ces résines est apte à être décapé par les mêmes agents décapants que ceux des peintures comprenant ces mêmes résines comme liant. Ainsi, lorsqu'un opérateur décapera la peinture de l'aéronef, le dispositif de marquage sera décapé avec la peinture car son film support contient les mêmes résines et est donc sensible aux mêmes agents décapants.

Le marquage peut être réalisé par des encres à séchage UV, des encres à solvants, des encres aqueuses, des peintures à séchage UV, des peintures à solvants, des peintures aqueuses. De préférence, le marquage est réalisé dans une encre ou une peinture de nature identique à celle destinée à peindre le substrat sur lequel le dispositif de marquage doit être appliqué.

Selon un mode de réalisation préféré, le marquage est un marquage imprimé numériquement, de préférence selon un mode goutte à la demande (Drop on demand DOD). Ainsi, le marquage est moins occlusif et les gaz issus de la polymérisation de la peinture peuvent passer au travers de ce dernier.

Le dispositif de marquage comprend de préférence une couche de vernis recouvrant la couche de marquage. La couche de vernis protège la couche de marquage et en particulier le marquage. Elle permet également un lissage de la couche de marquage et une bonne adhésion des vernis aéronautiques.

Selon un mode de réalisation préféré, la couche de vernis est composée de vernis sérigraphié, peint ou imprimé. Le vernis peut être peint par pistolage. De préférence, le vernis est imprimé, préférablement par impression numérique, de préférence par impression DOD. Le vernis est plus préférablement déposé par impression DOD car cette technique permet une meilleure perméabilité.

Le vernis peut être du vernis à séchage UV ou du vernis à solvant.

De préférence, la couche de vernis est apte à être décapée par un agent décapant. Le fait que la couche de vernis soit également décapable permet d'accélérer le décapage du dispositif de marquage lorsqu'il comprend une couche de vernis.

Le dispositif de marquage comprend également une couche d'adhésif. La couche de marquage est posée sur la couche d'adhésif.

De préférence, le côté inférieur du film support est posé sur la couche d'adhésif. Plus préférablement, le marquage est posé sur le film support, le film support étant, lui-même, posé sur la couche d'adhésif.

La couche d'adhésif peut être une couche d'adhésif sensible à la pression ou réactivable. De préférence, la couche d'adhésif est sensible à la pression.

Selon un mode de réalisation préféré, la couche d'adhésif présente une épaisseur comprise entre 25µm et 50µm.

La couche d'adhésif peut être protégée par une feuille de protection.

Le dispositif de marquage peut comprendre en outre une feuille de manipulation. La feuille de manipulation est posée la face supérieure de dispositif de marquage de manière à faciliter l'application de ce dernier. La feuille de manipulation est faiblement adhésive.

L'invention concerne également un procédé de fabrication d'un dispositif de marquage selon l'invention, caractérisé en ce qu'il comprend les étapes de :
- fournir un film support,
- appliquer un marquage sur au moins un côté du film support de manière à former une couche de marquage, -apposer une couche d'adhésif contre la couche de marquage et
- déposer un vernis sur la couche de marquage de manière à former une couche de vernis.

Selon un mode de réalisation préféré, le marquage est appliqué sur un côté du film support, de préférence sur le côté supérieur du film support.

De préférence, le procédé comprend l'étape de fournir un film support présentant un MVTR compris entre 50 et 1500 g/(m2.24h).

Selon un mode de réalisation préféré du procédé, l'application du marquage est réalisée par impression, préférablement par impression numérique, plus préférablement par DOD. Ainsi, le marquage est moins occlusif et le MVTR du dispositif de marquage peut être plus élevé.

Le dépôt du vernis est réalisé par sérigraphie et/ou par impression. De préférence, le dépôt du vernis est réalisé par impression, préférablement par impression numérique, plus préférablement par DOD.

Selon un mode de réalisation préféré, la couche d'adhésif est appliquée sur le côté inférieur du film support.

L'invention concerne également un procédé de fabrication d'un dispositif de marquage adhésif pour aéronef, caractérisé en ce qu'il comprend les étapes de :
- fournir un film support présentant un MVTR compris entre 50 et 1500g/(m².24h),
- appliquer un marquage sur au moins un côté du film support de manière à former une couche de marquage
- apposer une couche d'adhésif contre la couche de marquage et
- déposer un vernis sur la couche de marquage.

De préférence, le marquage est appliqué sur un côté du film support, préférablement le côté supérieur. Le côté supérieur du film support est opposé au côté inférieur du film support.

Selon un mode de réalisation préféré, le vernis est également déposé sur les parties du côté supérieur du film support sur lesquelles aucun marquage n'est imprimé.

De préférence, le marquage est appliqué par impression, préférablement par impression numérique, plus préférablement par impression DOD.

Selon un mode de réalisation préféré, la couche d'adhésif est appliquée sur le côté inférieur du film support.

De préférence, le dépôt du vernis est réalisé par sérigraphie et/ou par impression, préférablement par impression numérique, plus préférablement par impression DOD.

L'invention concerne également un aéronef comprenant un dispositif de marquage selon l'invention.

L'invention concerne aussi l'utilisation d'un dispositif de marquage selon l'invention pour le marquage d'un aéronef.

### 5. Liste des figures

D'autres buts, caractéristiques et avantages de l'invention apparaîtront à la lecture de la description suivante donnée à titre uniquement non limitatif et qui se réfère aux figures annexées dans lesquelles :

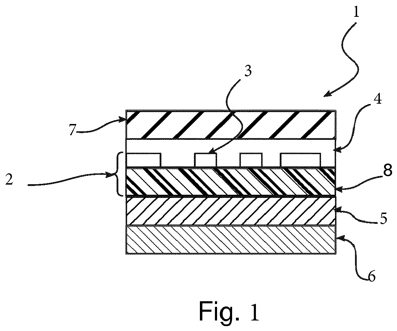

- la figure 1 est une vue schématique en coupe d'un dispositif de marquage selon un mode de réalisation de l'invention.

### 6. Description détaillée d'un mode de réalisation de l'invention

Sur la figure, les échelles et les proportions ne sont pas strictement respectées et ce, à des fins d'illustration et de clarté, en particulier les épaisseurs sont exagérément agrandies.

Le dispositif de marquage 1 représenté à la figure 1 comprend une feuille de manipulation 7, une couche de vernis 4, une couche de marquage 2, une couche d'adhésif 5 et une feuille de protection 6.

La couche de marquage comprend un marquage 3 posé sur un film support 8. Le marquage 3 est constitué d'encre d'une épaisseur comprise entre 5 et 50µm. Le film support 8 est posé sur la couche d'adhésif 5. La couche d'adhésif 5 a une épaisseur comprise entre 25µm et 50µm. La couche d'adhésif 5 est recouverte d'une feuille de protection 6. La feuille de protection 6 est prévue pour être facilement être retirée avant que le dispositif de marquage 1 ne soit utilisé. La feuille de protection 6 est par exemple en papier siliconé.

Une couche de vernis 4 recouvre le marquage 3. La couche de vernis 4 recouvre également la surface du film support 8 non recouvert par le marquage 3.

Une feuille de manipulation 7 est posée sur la couche de vernis 4. Le feuille de manipulation 7 est par exemple en papier ou en polyéthylène semi transparent. Elle est collée à la couche de vernis 4 avec une colle dont le pouvoir adhésif est supérieur au pouvoir adhésif de la couche d'adhésif 5 sur sa feuille de protection 6 mais très inférieur au pouvoir adhésif de cette même couche d'adhésif 5 sur le substrat.

### 7. Exemples

### Détermination du coefficient de transmission de vapeur d'eau

### Matériel et méthodes

Le coefficient de transmission de la vapeur d'eau du dispositif de marquage est déterminé selon la norme ASTM F 1249 à la température de 38°C et 100%HR.

Les mesures sont réalisées sur l'appareillage MOCON PERMETRAN W 3-33.

Cinq dispositifs de marquage ont été testés. Le premier dispositif de marquage comprend un film support) translucide en un matériau perméable. Le deuxième dispositif de marquage comprend un film support microporeux translucide. Le troisième dispositif de marquage comprend un film support classique. Le quatrième dispositif de marquage comprend un film support blanc en matériau perméable. Le cinquième dispositif comprend un film support blanc microporeux.

Pour chaque dispositif de marquage testé, un échantillon est placé dans une cellule de test entre deux chambres à la température de 38°C +/-1°C. La face adhésive du dispositif de marquage est placée du côté de chambre humide (100%HR) et l'autre face au contact de la chambre sèche balayé par du gaz azote sec avec un débit de 100ml/min. La vapeur d'eau transmise à travers le dispositif de marquage est analysée par un détecteur Infra-Rouge (analyse de 3 dispositifs de marquage par référence).

Les mesures sont effectuées après 30min de stabilisation in situ du dispositif de marquage. Le calibrage du signal est réalisé à l'aide d'un film étalon certifié « Water Vapor Transmission Reference » du NIST. Le bon fonctionnement du système de mesure est contrôlé pendant chaque série de mesures par la réponse d'un film étalon placé dans une chambre spéciale prévue à cet effet.

### Résultats

Les résultats sont exprimés en g/(m^{2∗}jour).

Ils dépendent de l'épaisseur. Ils sont donc également exprimés en g^{∗}mm/(m^{2∗}j)

**Tableau 1 : MVTR en g/(m^{2∗}jour)**

| Référence | e1 | Mesure 1 | e2 | Mesure 2 | e3 | Mesure 3 | Moyenne | Moyenne | Ecart type |
|---|---|---|---|---|---|---|---|---|---|
| | µm | g/(m^{2∗}j) | µm | g/(m^{2∗}j) | µm | g/(m^{2∗}j) | µm | g/(m^{2∗}j) | g/(m^{2∗}j) |
| Marquage 1 | 156 | 64.4 | 161 | 62.8 | 161 | 54.4 | 159 | 60.5 | 5.4 |
| Marquage 2 | 157 | 86.2 | 154 | 88 | 153 | 83.3 | 155 | 85.8 | 2.4 |
| Marquage 3 | 130 | 20.1 | 132 | 20.4 | 129 | 20.6 | 130 | 20.4 | 0.3 |
| Marquage 4 | 111 | 52.3 | 110 | 53 | 112 | 54.1 | 111 | 53.1 | 0.9 |
| Marquage 5 | 125 | 75.7 | 119 | 79.1 | 120 | 68.5 | 121 | 74.4 | 5.4 |

**Tableau 2 : MVTR en g^{∗}mm/(m^{2∗}j)**

| Référence | Mesure 1 | Mesure 2 | Mesure 3 | Moyenne | Ecart type |
|---|---|---|---|---|---|
| | g^{∗}mm/(m^{2∗}j) | g^{∗}mm/(m^{2∗}j) | g^{∗}mm/(m^{2∗}j) | g^{∗}mm/(m^{2∗}j) | g^{∗}mm/(m^{2∗}j) |
| Marquage 1 | 10.0 | 10.1 | 8.8 | 9.6 | 0.8 |
| Marquage 2 | 13.5 | 13.6 | 12.7 | 13.3 | 0.5 |
| Marquage 3 | 2.6 | 2.7 | 2.7 | 2.7 | 0.1 |
| Marquage 4 | 5.8 | 5.8 | 6.1 | 5.9 | 0.1 |
| Marquage 5 | 9.5 | 9.4 | 8.2 | 9.0 | 0.7 |

### Test de bullage

### Matériel et méthodes

Différentes peintures de type couche de base (base coat) ou couche de finition (top coat) ont été appliquées sur une surface utilisée en aéronautique (Aluminium 2024 CLAD, Aviox CF Primer 37124). Après un temps de séchage donné des dispositifs de marquage ont été apposés sur cette surface.

Une couche transparente (clear coat) a été appliqué sur l'ensemble. Après un temps de séchage donné à température ambiante (Tamb) ou à 60°C, l'état du dispositif de marquage a été vérifié visuellement, notamment pour vérifier la présence de bulles ou de craquelures.

### Résultats

Les résultats sont consignés dans le tableau 5 ci-dessous.

Aucun bullage n'a été observé pour des dispositifs de marquage de MVTR supérieur à 50 g/(m².j) suite à une application sur peinture qui est juste suffisamment sèche pour l'applicationde pochoirs (« dry to tape »).

Dans le tableau ci-dessous, le terme « dry to dust » s'applique pour une peinture qui vient d'être appliquée et qui apparaît sèche au toucher.

**Tableau 3-Test de bullage**

| Marquage | MVTR (g/(m^{2∗}j) | Cycle de peinture Basecoat accéléré Aerobase | | Cycle de peinture Basecoat Aerobase Dry to dust | | Cycle de peinture Basecoat Aerobase Dry to tape | | Cycle de peinture Topcoat 77702 Dry to dust | | Cycle de peinture Topcoat 77702 Dry to tape | |
|---|---|---|---|---|---|---|---|---|---|---|---|
| | | Temps de séchage peinture | | Temps de séchage peinture à Tamb | | | | Temps de séchage peinture à Tamb | | | |
| | | 15min Tamb+15 minT60°C | 25min Tamb+ 25min T60°C | 1.5h | 2h | | 3h | 2h | 3h | 4h | 5h |
| 1 | 60.5 | Bullage | Pas de bullage | Bullage très fin | Pas de bullage | | Pas de bullage | Bullage | Bullage très fin | Pas de bullage | Pas de bullage |
| 2 | 85.8 | Pas de bullage | Pas de bullage | Pas de bullage | Pas de bullage | | Pas bullage | Bullage très fin | Pas de bullage | Pas de bullage | Pas de bullage |
| 3 | 20.4 | Fort bullage | Bullage | Fort bullage | Fort bullage | | Bullage | Fort bullage | Bullage | Bullage | Bullage |
| 4 | 53.1 | NR | NR | Bullage très fin | Pas de bullage | | Pas de bullage | Bullage | Bullage très fin | Pas de bullage | Pas de bullage |
| 5 | 74.4 | Pas de bullage | Pas de bullage | Bullage très fin | Pas de bullage | | Pas de bullage | Bullage | Bullage très fin | Pas de bullage | Pas de bullage |

## Revendications

1. Dispositif de marquage (1) adhésif pour aéronef comprenant :
- une couche d'adhésif (5),
- une couche de marquage (2) posée sur la couche d'adhésif (5) et comprenant un marquage (3) et un film support (8) et
- une couche de vernis (4) recouvrant la couche de marquage (2) **caractérisé en ce que** le dispositif de marquage (1) présente un taux de transmission de vapeur humide (MVTR) supérieur ou égal à 50g/(m².j), le MVTR étant mesuré selon la norme ASTM F1249 à la température de 38°C et de 100% HR

2. Dispositif de marquage (1) selon la revendication 1, **caractérisé en ce que** le film support est en un matériau perméable, le matériau perméable étant un polyuréthane.

3. Dispositif de marquage (1) selon la revendication 1, **caractérisé en ce que** le film support est poreux, tissé et/ou perforé.

4. Dispositif de marquage (1) selon la revendication 3, **caractérisé en ce que** le film support est en un matériau choisi dans le groupe constitué de polyester, polyuréthane, polyéther, polyéthylène, polymère silicone, polytétrafluoroéthylène, polypropylène, polychlorure de vinyle, polyoléfine, polyalcène, polysulfone, poly(acétate de vinyle), poly(alcool vinylique) et polyamide.

5. Dispositif de marquage (1) selon l'une quelconque des revendications 1 à 4, **caractérisé en ce que** le dispositif de marquage (1) présente un MVTR compris entre 50 et 1500g/(m².j) déterminé selon la norme ASTM F1249 à la température de 38°C et de 100% HR

6. Dispositif de marquage (1) selon l'une quelconque des revendications 1 à 5, **caractérisé en ce que** le dispositif de marquage (1) est apte à être décapé par un agent décapant choisi dans le groupe constitué de l'alcool benzylique, du chlorure de méthylène, du phénol, du benzaldéhyde et de leurs mélanges.

7. Dispositif de marquage (1) selon l'une quelconque des revendications 1 à 6, **caractérisé en ce que** la couche de vernis (4) est composée de vernis sérigraphié, peint ou imprimé.

8. Dispositif de marquage (1) selon l'une quelconque des revendications 1 à 7, **caractérisé en ce que** la couche d'adhésif (5) est une couche d'adhésif (5) sensible à la pression ou réactivable.

9. Procédé de fabrication d'un dispositif de marquage (1) tel que défini selon l'une quelconque des revendications 1 à 8, **caractérisé en ce qu'**il comprend les étapes de :
- fournir un film support (8),
- appliquer un marquage sur au moins un côté du film support (8) de manière à former une couche de marquage (2),
- apposer une couche d'adhésif (5) contre la couche de marquage (2) et
- déposer un vernis sur la couche de marquage de manière à former une couche de vernis.

10. Procédé de fabrication d'un dispositif de marquage (1) adhésif pour aéronef, **caractérisé en ce qu'**il comprend les étapes de :
- fournir un film support (8) présentant un MVTR compris entre 50 et 1500g/(m².j), le MVTR étant mesuré selon la norme ASTM F1249 à la température de 38°C et de 100% HR,
- appliquer un marquage (3) sur au moins un côté du film support de manière à former une couche de marquage (2)
- apposer une couche d'adhésif (5) contre la couche de marquage (2) et
- déposer un vernis sur la couche de marquage de manière à former une couche de vernis.

## Patentansprüche

1. Klebemarkierungsvorrichtung (1) für Luftfahrzeuge, die Folgendes umfasst:
- eine Klebstoffschicht (5),
- eine Markierungsschicht (2), die auf der Klebstoffschicht (5) angeordnet ist und eine Markierung (3) und eine Trägerfolie (8) umfasst, und
- eine die Markierungsschicht (2) bedeckende Lackschicht (4), **dadurch gekennzeichnet, dass** die Markierungsvorrichtung (1) eine Wasserdampfdurchlässigkeit (MVTR) von mindestens 50 g/m²/24h) aufweist, wobei die MVTR nach ASTM F1249 bei einer Temperatur von 38°C und einer relativen Luftfeuchte von 100 % gemessen wird.

2. Markierungsvorrichtung (1) nach Anspruch 1, **dadurch gekennzeichnet, dass** die Trägerfolie aus einem durchlässigen Material besteht, wobei das durchlässige Material ein Polyurethan ist.

3. Markierungsvorrichtung (1) nach Anspruch 1, **dadurch gekennzeichnet, dass** die Trägerfolie porös, gewebt und/oder perforiert ist.

4. Markierungsvorrichtung (1) nach Anspruch3, **dadurch gekennzeichnet, dass** die Trägerfolie aus einem Material besteht, das aus der Gruppe ausgewählt ist, die aus Polyester, Polyurethan, Polyether, Polyethylen, Silikonpolymer, Polytetrafluorethylen, Polypropylen, Polyvinylchlorid, Polyolefin, Polyalken, Polysulfon, Polyvinylacetat, Polyvinylalkohol und Polyamid besteht.

5. Markierungsvorrichtung (1) nach einem der Ansprüche 1 bis 4, **dadurch gekennzeichnet, dass** die Markierungsvorrichtung (1) eine MVTR zwischen 50 und 1500 g/m²/24h) aufweist, die nach ASTM F 1249 bei einer Temperatur von 38°C und einer relativen Luftfeuchte von 100 % bestimmt wird.

6. Markierungsvorrichtung (1) nach einem der Ansprüche 1 bis 5, **dadurch gekennzeichnet, dass** die Markierungsvorrichtung (1) durch ein Ätzmittel, das aus der Gruppe ausgewählt ist, die aus Benzylalkohol, Methylenchlorid, Phenol und Benzaldehyd und ihren Gemischen besteht, abgeätzt werden kann.

7. Markierungsvorrichtung (1) nach einem der Ansprüche 1 bis 6, **dadurch gekennzeichnet, dass** die Lackschicht (4) aus einem Siebdruck-, Farb- oder Drucklack besteht.

8. Markierungsvorrichtung (1) nach einem der Ansprüche 1 bis 7, **dadurch gekennzeichnet, dass** die Klebstoffschicht (5) eine Klebstoffschicht (5) ist, die druckempfindlich oder reaktivierbar ist.

9. Verfahren zur Herstellung einer Markierungsvorrichtung (1) nach einem der Ansprüche 1 bis 8, **dadurch gekennzeichnet, dass** es die folgenden Schritte umfasst:
- Bereitstellen einer Trägerfolie (8),
- Aufbringen einer Markierung auf mindestens eine Seite der Trägerfolie (8), um eine Markierungsschicht (2) zu bilden,
- Anbringen einer Klebstoffschicht (5) an der Markierungsschicht (2), und
- Aufbringen eines Lacks auf die Markierungsschicht, um eine Lackschicht zu bilden.

10. Verfahren zur Herstellung einer Klebemarkierungsvorrichtung (1) für Luftfahrzeuge, **dadurch gekennzeichnet, dass** es die folgenden Schritte umfasst:
- Bereitstellen einer Trägerfolie (8) mit einer MVTR zwischen 50 und 1500 g/m²/24h), wobei die MVTR gemäß ASTM F 1249 bei einer Temperatur von 38°C und einer relativen Luftfeuchte von 100 % gemessen wird,
- Aufbringen einer Markierung (3) auf mindestens eine Seite der Trägerfolie zur Bildung einer Markierungsschicht (2),
- Anbringen einer Klebstoffschicht (5) an der Markierungsschicht (2), und
- Aufbringen eines Lacks auf die Markierungsschicht, um eine Lackschicht zu bilden.

## Claims

1. An adhesive marking device (1) for an aircraft comprising:
- an adhesive layer (5),
- a marking layer (2) arranged on the adhesive layer (5) and comprising a marking (3) and a carrier film (8), and
- a varnish layer (4) covering the marking layer (2),
**characterised in that** the marking device (1) has a moisture vapour transmission rate (MVTR) that is greater than or equal to 50g/(m².day), the MVTR being measured in accordance with the ASTM standard F 1249 at a temperature of 38°C and 100% RH.

2. The marking device (1) according to claim 1, **characterised in that** the carrier film is made of a permeable material, the permeable material being a polyurethane.

3. The marking device (1) according to claim 1, **characterised in that** the carrier film is porous, woven and/or perforated.

4. The marking device (1) according to claim 3, **characterized in that** the carrier film is of a material selected from the group consisting of polyester, polyurethane, polyether, polyethylene, silicone polymer, polytetrafluoroethylene, polypropylene, polyvinyl chloride, polyolefin, polyalkene, polysulfone, polyvinyl acetate, polyvinyl alcohol and polyamide.

5. The marking device (1) according to any one of claims 1 to 4, **characterised in that** the marking device (1) has an MVTR of between 50 and 1500g/(m².day) determined according to the ASTM standard F 1249 at a temperature of 38°C and 100% RH.

6. The marking device (1) according to any one of claims 1 to 5, **characterized in that** the marking device (1) is suitable for being stripped with a stripping agent selected from the group consisting of benzyl alcohol, methylene chloride, phenol, benzaldehyde and mixtures thereof.

7. The marking device (1) according to any one of claims 1 to 6, **characterised in that** the varnish layer (4) is composed of screen-printed, painted or printed varnish.

8. The marking device (1) according to any one of claims 1 to 7, **characterized in that** the adhesive layer (5) is a pressure sensitive or reactivatable adhesive layer (5).

9. A method of manufacturing a marking device (1) as defined in any one of claims 1 to 8, **characterised in that** it comprises the steps of:
- providing a carrier film (8),
- applying a marking to at least one side of the carrier film (8) so as to form a marking layer (2),
- affixing an adhesive layer (5) against the marking layer (2) and
- depositing a varnish to the marking layer so as to form a varnish layer.

10. A method of manufacturing an adhesive marking device (1) for an aircraft, **characterised in that** it comprises the steps of:
- providing a carrier film (8) having an MVTR of between 50 and 1500g/(m².day), the MVTR being measured according to the ASTM standard F 1249 at a temperature of 38°C and 100% RH.
- applying a marking (3) to at least one side of the carrier film to form a marking layer (2)
- affixing an adhesive layer (5) against the marking layer (2) and
- depositing a varnish to the marking layer to form a varnish layer.
